# EUROPÄISCHE PATENTSCHRIFT

(11) **EP 2 408 659 B1**
(45) Veröffentlichungstag und Bekanntmachung des Hinweises auf die Patenterteilung: **03.04.2013**
(21) Anmeldenummer: 10708160.6
(22) Anmeldetag: 23.02.2010
(51) Int. Cl.: B62K 21/16

(54) **LENKERVORBAU FÜR EIN ZWEIRAD**
HANDLEBAR STEM FOR BICYCLE
POTENCE DE GUIDON POUR BICYCLETTE

(30) Priorität: 16.03.2009 DE 102009013022
(43) Veröffentlichungstag der Anmeldung: 25.01.2012
(73) Patentinhaber: Muff, André Armando, 8006 Zürich (CH)
(72) Erfinder: Muff, André Armando, 8006 Zürich (CH)
(74) Vertreter: Kohlmann, Kai
(86) Internationale Anmeldenummer: PCT/EP2010/052272
(87) Internationale Veröffentlichungsnummer: WO 2010/105893

(56) Entgegenhaltungen:
- EP-A2- 0 072 688
- DE-U1-202004 000 012
- GB-A- 578 359
- US-A- 2 180 617

## Beschreibung

Die Erfindung betrifft einen Lenkervorbau für ein Zweirad zur Verbindung einer Lenkstange mit einem Gabelschaftrohr der Vorderradgabel des Zweirades, bei dem die Lenkerstange längenverstellbar an einem Lenkervorbauelement angeordnet ist, indem sie sich in Richtung einer Längsachse des Lenkervorbaus verlagern lässt. Insbesondere betrifft die Erfindung einen Lenkervorbau für ein Fahrrad.

Als Vorbau bezeichnet man das Bauteil eines Fahrradrahmens, welches das Gabelschaftrohr der Vorderradgabel, die im Steuerrohr drehbar gelagert ist, mit der Lenkstange verbindet. Die Länge des Vorbaus hat einen erheblichen Einfluss auf die Position des Fahrers und die Fahreigenschaften des Fahrrades, insbesondere dessen Lenkeigenschaften sowie die Steigfähigkeit des Rades.

Üblicherweise wird neben der Größe des Fahrradrahmens die Länge des Vorbaus individuell auf den Fahrer und den bevorzugten Einsatzzweck des Fahrrades angepasst. Hierzu werden starre Vorbauten mit unterschiedlichen Längen und Anstellwinkeln bereit gehalten und entsprechend den Bedürfnissen des Fahrers verbaut. Bei sich verändernden Einsatzbedingungen des Fahrrades ist eine rasche Anpassung des Lenkervorbaus lediglich mit erheblichem Umbauaufwand möglich. Des Weiteren ist es erforderlich, stets den gesamten Vorbau auszutauschen, was mit vergleichsweise hohen Kosten verbunden ist.

Es sind daher bereits längenverstellbare Lenkervorbauten verwirklicht worden. Aus der DE 94 11 263 U1 ist ein gattungsgemäßer längenverstellbarer Lenkervorbau bekannt, bei dem in einem im wesentlichen horizontal verlaufenden Vorbauelement in einer Längsnut eine Klemmvorrichtung zur Aufnahme der Lenkstange geführt ist. Durch Öffnen einer Schnellspannschraube wird die Klemmvorrichtung gelöst und kann in der Längsnut verschoben werden. In dem die Klemmvorrichtung für die Lenkstange verschiebbar auf dem Vorbauelement angeordnet ist, wird faktisch eine Verstellung der Vorbaulänge erreicht. Die Längenverstellung ist jedoch relativ aufwendig. Sie erfordert sowohl an der Ober- als auch der Unterseite die Einbringung einer Längsnut in das Vorbauelement, wodurch eine gewisse Schwächung des Vorbaus eintritt. Des Weiteren ist die separate Klemmvorrichtung erforderlich, die in der oberen Nut geführt wird. Die in die Klemmvorrichtung eingreifende Schnellspannschraube weist an ihrem gegenüberliegenden Ende einen Nutenstein auf. Der Nutenstein greift in die auf der Unterseite des Vorbauelementes eingebrachte Nut ein.

Ferner is aus der US 2 180 617 A eine Klemmhalterung zur Verbindung von zwei Armen einer Lenkereinrichtung mit einem Gabelschaftrohr der Vordergabel eines Zweirads bekannt. Die Enden der beiden Arme werden in einem Gehäuse zwischen dem Inneren der Gehäusewandung und zwei Keilabschnitten des Gabelschaftrohres verkeilt, wobei die notwendige Keilwirkung mit Hilfe einer endseitig auf das Gabelschaftrohr aufgeschraubten Nuss erzeugt wird, die die Keilflächen bündig an den Enden der Arme der Lenkvorrichtung zur Anlage bringt.

Ausgehend von diesem Stand der Technik liegt der Erfindung die Aufgabe zu Grunde, einen gattungsgemäßen Lenkervorbau zu schaffen, bei dem ohne Schwächung des Vorbauelementes durch das Einbringen von Schlitzen mit geringst möglichem konstruktivem Aufwand eine Längenverstellung zumindest zwischen zwei Positionen möglich ist.

Diese Aufgabe wird bei einem Lenkervorbau der eingangs erwähnten Art erfindungsgemäß dadurch gelöst, dass in dem Lenkervorbau ein Langloch zur Aufnahme der Lenkerstange angeordnet ist, die Schmalseiten des Langlochs durch Halbkreise abgeschlossen werden, die Durchmesser der Halbkreise der Schmalseiten des Langlochs derart auf den Durchmesser der Lenkstange in dem von dem Langloch aufgenommenen Abschnitt der Lenkstange abgestimmt sind, dass der Durchmesser der Lenkstange in dem von dem Langloch aufgenommenen Abschnitt den Durchmessern der Halbkreise der Schmalseiten des Langlochs entspricht, an dem Lenkervorbauelement an der dem Gabelschaftrohr abgewandeten Stirnseite lösbar ein Klemmelement angeordnet ist, sich eine der Schmalseiten des Langloch in dem Lenkervorbauelement und eine der Schmalseiten des Langlochs in dem Klemmelement befinden und zwischen der Lenkstange und mindestens einer der Schmalseiten des Langlochs mindestens ein Klemmeinsatz zum Fixieren der Lenkstange in dem Langloch angeordnet ist.

Um eine möglichst gleichmäßige Krafteinleitung der von dem Klemmeinsatz auf die Lenkstange ausgeübten Kraft zu gewährleisten, ist der Klemmeinsatz ein grader zylindrischer Körper, dessen stirnseitige Flächen von zwei parallel zueinander angeordneten Halbkreisen sowie zwei parallel zueinander angeordneten Graden gebildet werden, wobei die Durchmesser der Halbkreise von Langloch und Klemmeinsatz einander entsprechen. Eine Entsprechung liegt vor, wenn die Durchmesser im technischen Sinne übereinstimmen, insbesondere wenn die Oberfläche des Klemmeinsatzes einerseits bündig an der Oberfläche der Schmalseite des Langlochs und andererseits bündig an der Oberfläche der Lenkstange anliegt.

Sofern lediglich ein Klemmeinsatz vorgesehen ist, kann durch Drehen des Einsatzes um 180 Grad die Lenkstange entweder in der vorderen oder hinteren Position des Langlochs fixiert werden. In der vorderen Position kommt die Lenkstange mit der Schmalseite des Langlochs in dem Klemmelement in Kontakt, während sie in der hinteren Position unmittelbar mit der Schmalseite des Langlochs in dem Lenkervorbauelement in Kontakt gelangt.

Abhängig von der Länge des Langlochs kommt es zu einer mehr oder weniger großen axialen Verlagerung der Lenkstange in Richtung der Längsachse des Lenkervorbaus.

Um eine feinere Abstufung der Längeneinstellung zu ermöglichen, ist es in einer Ausgestaltung der Erfindung vorgesehen, dass zwischen der Lenkstange und beiden Schmalseiten des Langlochs mindestens ein Klemmeinsatz zum Fixieren der Lenkstange in dem Langloch angeordnet ist. Durch verschiedene Sätze von Klemmeinsätzen kann die Lenkstange in unterschiedlichen Zwischenstelllungen in dem Langloch fixiert werden. Das Langloch wird dabei stets durch die Klemmeinsätze und die Lenkstange ausgefüllt.

Die Summe aus den Abständen zwischen den Halbkreisen der stirnseitigen Flächen der Einsätze und dem Durchmesser der Lenkstange in dem von dem Langloch aufgenommenen Abschnitt ist jedoch vorzugsweise geringfügig größer als die Länge des Langlochs. Hierdurch entsteht ein schmaler, quer zu Längsachse des Lenkervorbaus verlaufender Spalt zwischen dem Lenkervorbauelement und dem lösbaren Klemmelement. Mit Hilfe mindestens einer Spannschraube zum Verspannen des Klemmelementes gegen das Vorbauelement lässt sich daher stets eine hinreichende Anpresskraft auf die Lenkstange ausüben, so dass diese in dem Langloch mit Hilfe der Klemmeinsätze sicher fixiert wird.

Die Spannschraube greift vorzugsweise in ein am Außenmantel des Vorbauelementes in einem Flansch oder Ansatz angeordnetes Innengewinde ein. Um die erforderliche Vorspannkraft aufbauen zu können, ist vorzugsweise ein Widerlager für jede Spannschraube an dem Klemmelement angeordnet.

Um die Längenverstellung rasch und insbesondere ohne Werkzeug durchführen zu können, ist die Spannschraube vorzugsweise als Schnellspannschraube mit einem Handgriff ausgestaltet.

Zur Erhöhung der Verwindungssteifheit des Vorbauelementes ist dieses insbesondere als Kastenprofil ausgestaltet. Ein Kastenprofil ist zudem produktionstechnisch vorteilhaft, insbesondere bei der Ausbildung des lösbar an dem Vorbauelement angeordneten Klemmelementes.

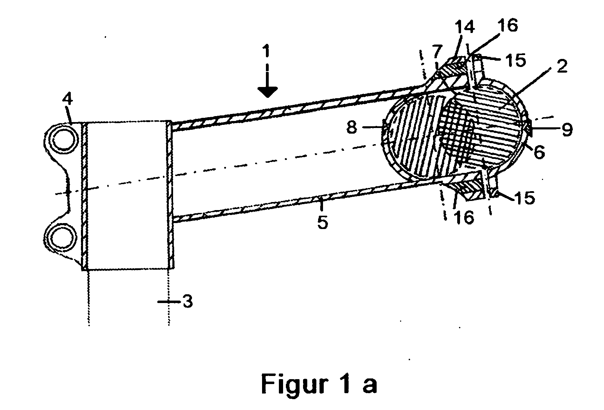

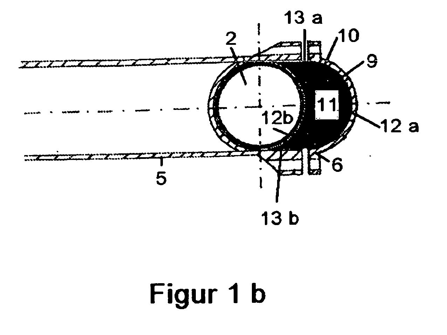

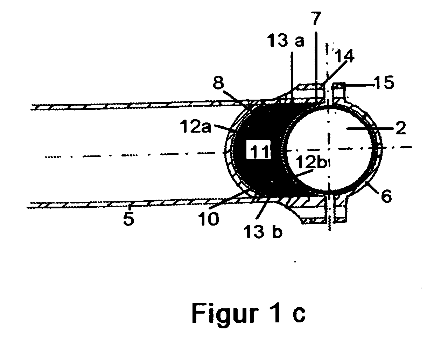

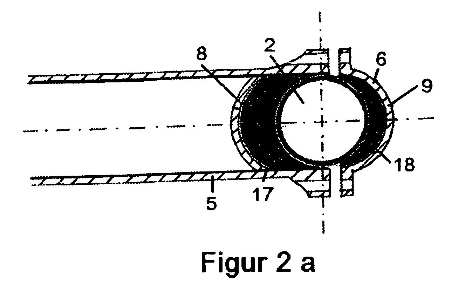

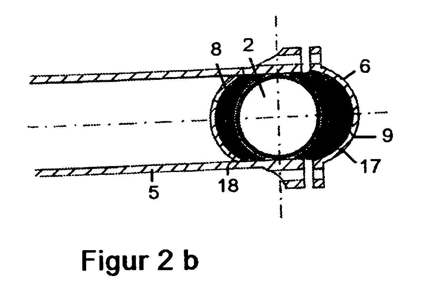

Nachfolgend wird die Erfindung anhand der Figuren 1 und 2 näher erläutert. Es zeigen:
- **Figur 1 a**: einen Schnitt durch einen erfindungsgemäßen Lenkervorbau,
- **Figur 1 b**: einen Teilschnitt durch den erfindungsgemäßen Lenkervorbau mit einer ersten Längeneinstellung der Lenkstange
- **Figur 1 c**: einen Teilschnitt durch einen erfindungsgemäßen Lenkervorbau mit einer zweiten Längeneinstellung der Lenkstange
- **Figur 2 a**: ein Teilschnitt durch einen erfindungsgemäßen Lenkervorbau unter Verwendung von zwei Klemmeinsätzen in einer ersten Längeneinstellung der Lenkstange sowie
- **Figur 2 b**: ein Teilschnitt durch einen erfindungsgemäßen Lenkervorbau unter Verwendung von zwei Klemmeinsätzen in einer zweiten Längeneinstellung der Lenkstange.

Der Lenkervorbau (1) für ein Fahrrad dient zur Verbindung einer Lenkstange (2) mit einem Gabelschaftrohr (3). Die Verbindung zwischen Lenkervorbau (1) und Gabelschaftrohr (3) erfolgt mit einer Klemmverbindung (4). Die Klemmverbindung (4) befindet sich an der Stirnseite eines im Querschnitt rechteckigen Lenkervorbauelementes (5). An der gegenüberliegenden Stirnseite ist lösbar ein Klemmelement (6) angeordnet.

In dem Lenkervorbau (1) ist ausgehend von der dem Gabelschaftrohr (3) gegenüberliegenden Stirnseite ein Langloch (7) zur Aufnahme der Lenkerstange (2) angeordnet. Die erste Schmalseite (8) des Langlochs (7) befindet sich in dem Lenkervorbauelement (5), die zweite Schmalseite (9) des Langlochs (7) befindet sich in dem Klemmelement (6).

In der Darstellung nach Figur 1 b befindet sich zwischen der Lenkstange (2) und der zweiten Schmalseite (9) des Langlochs (7) ein Klemmeinsatz (10) zum Fixieren der Lenkstange (2) in dem Langloch (7). Die Lenkstange befindet sich in der in Fahrradlängsrichtung hinteren Position.

Durch Drehen des Klemmeinsatzes (10) um 180 Grad befindet sich dieser zwischen der Lenkstange (2) und der ersten Schmalseite (8) des Langlochs (7), so dass sich die Lenkstange (2) in der in Figur 1 c dargestellten, in Fahrradlängsrichtung vorderen Position befindet.

Um eine möglichst bündige Anlage des Klemmeinsatzes (10) an der ersten bzw. zweiten Schmalseite (8,9) des Langlochs (7) einerseits und der Lenkstange (2) andererseits zu gewährleisten, ist der Klemmeinsatz (10) als gerader zylindrischer Körper ausgestaltet, dessen in den Figuren 1 b und 1 c erkennbare, stirnseitige Flächen (11) von zwei parallel zueinander angeordneten Halbkreisen (12 a, b) sowie zwei parallel zueinander angeordneten Geraden (13 a, b) gebildet werden, wobei die Geraden (13a, b) die Enden der Halbkreise (12 a, b) miteinander verbinden.

Die erforderliche Klemmkraft wird auf die Lenkstange (2) mit Hilfe von in den Figuren nicht dargestellten Spannschrauben zum Verspannen des Klemmelementes (6) gegen das Vorbauelement (5) ausgeübt. Die Spannschrauben greifen in Innengewinde (16) eines auf dem Außenmantel des Vorbauelementes (5) angeordneten Flansches (14) ein und stützen sich an Widerlagern (15) ab, die zugleich einen Durchgang für die Klemmschraube aufweisen.

Figur 2 zeigt den erfindungsgemäßen Lenkervorbau unter Verwendung von zwei Klemmeinsätzen, wobei jeweils ein Klemmeinsatz (17, 18) zwischen der Lenkstange (2) und den beiden Schmalseiten (8, 9) des Langlochs (7) angeordnet ist.

In Figur 2 a befindet sich der größere Klemmeinsatz (17) in Anlage zu der ersten Schmalseite (8) des Langlochs, so dass sich die Lenkstange (2) in einer in Fahrradlängsrichtung vorderen Position befindet, die jedoch gegenüber der in Figur 1 c dargestellten Position leicht zurück verlagert ist. In Figur 2 b befindet sich der kleinere Klemmeinsatz (18) in Anlage an der ersten Schmalseite (8) in dem Vorbauelement (5), so dass sich die Lenkstange (2) in einer in Fahrradlängsrichtung weiter hinten liegenden Position befindet. Diese Position ist jedoch gegenüber der in Figur 1 b dargestellten Position nach vorne verlagert.

Durch aufeinander abgestimmte Klemmeinsätze (17, 18) lassen sich beliebige Zwischenpositionen der Lenkstange (2) in dem Langloch (7) einstellen, ohne dass ein Austausch des Lenkervorbaus (1) erforderlich ist. Vorzugsweise wird ein erfindungsgemäßer Lenkervorbau mit mehreren Klemmeinsätzen (10, 17, 18) für eine enggestufte Längenverstellung der Lenkerstange (2) ausgeliefert.

### Bezugszeichenliste

| **Nr.** | **Bezeichnung** |
|---|---|
| 1 | Lenkervorbau |
| 2 | Lenkstange |
| 3 | Gabelschaftrohr |
| 4 | Klemmverbindung |
| 5 | Lenkervorbauelement |
| 6 | Klemmelement |
| 7 | Langloch |
| 8 | erste Schmalseite |
| 9 | zweite Schmalseite |
| 10 | Klemmeinsatz |
| 11 | stirnseitige Flächen |
| 12 a, b | Halbkreise |
| 13 a, b | Geraden |
| 14 | Flansch |
| 15 | Widerlager |
| 16 | Innengewinde |
| 17 | Klemmeinsatz |
| 18 | Klemmeinsatz |

## Patentansprüche

1. Lenkervorbau für ein Zweirad zur Verbindung einer Lenkstange mit einem Gabelschaftrohr der Vorderradgabel des Zweirades, bei dem die Lenkerstange längenverstellbar an einem Lenkervorbauelement angeordnet ist, indem sie sich in Richtung einer Längsachse des Lenkervorbaus verlagern lässt,
**dadurch gekennzeichnet, dass**
- an einer dem Gabelschaftrohr (3) abgewandeten Stirnseite des Lenkervorbauelementes (5) lösbar ein Klemmelement (6) angeordnet ist,
- in dem Lenkervorbau (1) ein Langloch (7) zur Aufnahme der Lenkerstange (2) angeordnet ist,
- die Schmalseiten (8,9) des Langlochs (7) durch Halbkreise abgeschlossen werden,
- die Durchmesser der Halbkreise der Schmalseiten (8,9) des Langlochs (7) derart auf den Durchmesser der Lenkstange (2) in dem von dem Langloch (7) aufgenommenen Abschnitt der Lenkstange abgestimmt sind, dass der Durchmesser der Lenkstange (2) in dem von dem Langloch (7) aufgenommenen Abschnitt den Durchmessern der Halbkreise der Schmalseiten (8,9) des Langlochs (7) entspricht,
- sich eine der Schmalseiten (8) des Langlochs in dem Lenkervorbauelement (5) und eine der Schmalseiten (9) des Langlochs (7) in dem Klemmelement (6) befinden und
- zwischen der Lenkstange (2) und mindestens einer der Schmalseiten (8,9) des Langlochs (7) mindestens ein Klemmeinsatz (10) zum Fixieren der Lenkstange (2) in dem Langloch (7) angeordnet ist.

2. Lenkervorbau nach Anspruch 1, **dadurch gekennzeichnet, dass** der Klemmeinsatz (10) ein gerader zylindrischer Körper ist, dessen stirnseitige Flächen (11) von zwei parallel zueinander angeordneten Halbkreisen (12a, b) sowie zwei parallel zueinander angeordneten Geraden (13 a, b) gebildet werden, wobei die Durchmesser der Halbkreise (12 a, b) von Langloch (7) und Klemmeinsatz (10) einander entsprechen.

3. Lenkervorbau nach Anspruch 1 oder 2, **dadurch gekennzeichnet, dass** zwischen der Lenkstange (2) und beiden Schmalseiten (8, 9) des Langlochs (7) mindestens ein Klemmeinsatz (10) zum fixieren der Lenkstange in dem Langloch (7) angeordnet ist.

4. Lenkervorbau nach Anspruch 2 oder 3, **dadurch gekennzeichnet, dass** die Summe aus dem Abstand bzw. den Abständen zwischen den Halbkreisen (12a, b) der stirnseitigen Fläche(n) (11) und dem Durchmesser der Lenkstange (2) in dem von dem Langloch (7) aufgenommenen Abschnitt geringfügig größer als die Länge des Langlochs (7) ist.

5. Lenkervorbau nach Anspruch 3 oder 4, **dadurch gekennzeichnet, dass** das Klemmelement (10) mindestens ein Widerlager (15) für mindestens eine Spannschraube zum Verspannen des Klemmelementes (6) gegen das Vorbauelement (5) aufweist.

6. Lenkervorbau nach Anspruch 5, **dadurch gekennzeichnet, dass** die Spannschraube als Schnellspannschraube ausgestaltet ist.

7. Lenkervorbau nach einem der Ansprüche 1 bis 6, **dadurch gekennzeichnet, dass** das Vorbauelement (5) als Kastenprofil ausgestaltet ist.

## Claims

1. A handlebar stem for a two-wheeled vehicle for connecting a handlebar to a fork steering tube of the front wheel fork of the two-wheeled vehicle, in which the handlebar is arranged in a length-adjustable manner on a handlebar stem element in that it can be displaced in the direction of a longitudinal axis of the handlebar stem,
**characterised in that**
- a clamping element (6) is arranged releasably on an end side of the handlebar stem element (5) facing away from the fork steering tube (3),
- a slot (7) for receiving the handlebar (2) is arranged in the handlebar stem (1),
- the narrow sides (8, 9) of the slot (7) are terminated by semicircles,
- the diameters of the semicircles of the narrow sides (8, 9) of the slot (7) are matched to the diameter of the handlebar (2) in the section of the handlebar received by the slot (7) in such a manner that the diameter of the handlebar (2) in the section received by the slot (7) corresponds to the diameters of the semicircles of the narrow sides (8, 9) of the slot (7),
- one of the narrow sides (8) of the slot is situated in the handlebar stem element (5) and one of the narrow sides (9) of the slot (7) is situated in the clamping element (6), and
- at least one clamping insert (10) for fixing the handlebar (2) in the slot (7) is arranged between the handlebar (2) and at least one of the narrow sides (8, 9) of the slot (7).

2. The handlebar stem according to Claim 1, **characterised in that** the clamping insert (10) is a straight, cylindrical body, the end faces (11) of which are formed by two semicircles (12a, b) arranged parallel to each other and two straight lines (13a, b) arranged parallel to each other, wherein the diameters of the semicircles (12a, b) of the slot (7) and of the clamping insert (10) correspond to each other.

3. The handlebar stem according to Claim 1 or 2, **characterised in that** at least one clamping insert (10) for fixing the handlebar in the slot (7) is arranged between the handlebar (2) and the two narrow sides (8, 9) of the slot (7).

4. The handlebar stem according to Claim 2 or 3, **characterised in that** the sum of the distance or distances between the semicircles (12a, b) of the end face(s) (11) and the diameter of the handlebar (2) in the section received by the slot (7) is slightly greater than the length of the slot (7).

5. The handlebar stem according to Claim 3 or 4, **characterised in that** the clamping element (10) has at least one counter bearing (15) for at least one clamping screw for bracing the clamping element (6) against the stem element (5).

6. The handlebar stem according to Claim 5, **characterised in that** the clamping screw is designed as a quick-clamping screw.

7. The handlebar stem according to one of Claims 1 to 6, **characterised in that** the stem element (5) is designed as a box profile.

## Revendications

1. Avant-corps d'un guidon pour une bicyclette, pour relier une barre de guidon avec le tube de fourche de la fourche de la roue avant de la bicyclette, sur lequel la barre de guidon est disposée en étant réglable en longueur sur un élément d'avant-corps de guidon, en ce qu'elle se laisse déplacer en direction d'un axe longitudinal de l'avant-corps de guidon,
**caractérisé en ce que**
- sur une face frontale de l'élément d'avant-corps de guidon (5) qui est opposée au tube de fourche (3), un élément de serrage (6) est disposé de manière amovible,
- dans l'avant-corps de guidon (1) est disposé un trou oblong (7) pour recevoir la barre de guidon (2),
- les côtés étroits (8, 9) du trou oblong (7) sont fermés par des demi-cercles,
- les diamètres des demi-cercles der côtés étroits (8, 9) du trou oblong (7) sont adaptés au diamètre de la barre de guidon (2) dans le tronçon logé dans le trou oblong (7) de telle sorte que le diamètre de la barre de guidon (2) dans le tronçon logé dans le trou oblong (7) corresponde aux diamètres des demi-cercles des côtés étroits (8, 9) du trou oblong (7),
- l'un des côtés étroits (8) du trou oblong se trouve dans l'avant-corps de guidon (5) et l'un des côtés étroits (9) du trou oblong (7) se trouve dans l'élément de serrage (6) et
- entre la barre de guidon (2) et au moins l'un des côtés étroits (8, 9) du trou oblong (7) est disposé au moins un insert de serrage (10) pour fixer la barre de guidon (2) dans le trou oblong (7).

2. Avant-corps de guidon selon la revendication 1, **caractérisé en ce que** l'insert de serrage (10) est un corps cylindrique droit, dont les surfaces frontales (11) sont formées par deux demi-cercles (12a, b) disposés à la parallèle l'un de l'autre et qu'il est formé deux droites (13a, b) disposées à la parallèle l'une de l'autre, les diamètres des demi-cercles (12a, b) du trou oblong (7) et de l'insert de serrage (10) se correspondant.

3. Avant-corps de guidon selon la revendication 1 ou la revendication 2, **caractérisé en ce qu'**entre la barre de guidon (2) et les deux côtés étroits (8, 9) du trou oblong (7) est disposé au moins un insert de serrage (10) pour fixer la barre de guidon dans le trou oblong (7).

4. Avant-corps de guidon selon la revendication 2 ou la revendication 3, **caractérisé en ce que** la somme de l'écart ou des écarts entre les demi-cercles (12a, b) de la (des) surface(s) frontale(s) (11) et du diamètre de la barre de guidon (2) dans le tronçon logé dans le trou oblong (7) est légèrement supérieure à la longueur du trou oblong (7).

5. Avant-corps de guidon selon la revendication 3 ou la revendication 4, **caractérisé en ce que** l'élément de serrage (10) comporte au moins une culée (15) pour au moins une vis de serrage pour contraindre l'élément de serrage (6) contre l'élément d'avant-corps (5).

6. Avant-corps de guidon selon la revendication 5, **caractérisé en ce que** la vis de serrage est conçue en tant que vis de serrage rapide.

7. Avant-corps de guidon selon l'une quelconque des revendications 1 à 6, **caractérisé en ce que** l'élément d'avant-corps (5) est conçu en tant que profilé en caisson.
